Europäisches Patentamt

(19) European Patent Office

Office européen des brevets

(11) Numéro de publication: **0 052 864**
**B1**

(12) # FASCICULE DE BREVET EUROPEEN

(45) Date de publication du fascicule du brevet:
04.04.84

(21) Numéro de dépôt: 81109773.2

(22) Date de dépôt: 19.11.81

(51) Int. Cl.³: **B 01 D 21/00,** B 01 D 21/14,
B 01 D 21/24, C 02 F 1/52

(54) **Dispositif pour la décantation d'un fluide.**

(30) Priorité: **20.11.80 FR 8024627**

(43) Date de publication de la demande:
**02.06.82 Bulletin 82/22**

(45) Mention de la délivrance du brevet:
**04.04.84 Bulletin 84/14**

(84) Etats contractants désignés:
**BE DE FR GB IT**

(56) Documents cités:
**DE - A - 1 517 394**
**DE - A - 1 642 790**
**FR - A - 1 105 554**
**US - A - 2 527 788**
**US - A - 2 838 180**
**US - A - 3 152 071**

(73) Titulaire: **ALSTHOM-ATLANTIQUE Société anonyme dite:, 38, Avenue Kléber, F-75784 Paris Cedex 16 (FR)**

(72) Inventeur: **Lejeune, Pierre, 206, Cours de la Libération, F-38100 Grenoble (FR)**
Inventeur: **Serpaud, Jean, 16, Place Sainte-Claire, F-38000 Grenoble (FR)**

(74) Mandataire: **Weinmiller, Jürgen et al, Zeppelinstrasse 63, D-8000 München 80 (DE)**

BUNDESDRUCKEREI BERLIN

Dispositif pour la décantation d'un fluide

La présente invention concerne un dispositif pour la décantation d'un fluide chargé de particules solides.

Le document DE-A-1 642 790 décrit une installation de décantation d'eau associant deux bassins de types différents. Un premier bassin central de décantation et d'épaississement des boues et un second bassin annulaire du type à lit de boues. Cette association est intéressante lorsque les volumes d'eau à traiter sont très important, en effet les bassins du premier type ont une vitesse de décantation lente et nécessitent, pour traiter un grand débit, une très grande surface, et les bassins à lit de boue coniques ont une hauteur prohibitive dès que l'on veut traiter des débits importants.

Cependant l'installation décrite dans le codument cité ci-dessus nécessite un système de raclage des boues dans le bassin à lit de boues et un système de pompage des boues du bassin à lit de boues vers le bassin central de décantation et d'épaississement des boues.

La présente invention a pour but d'éviter ces systèmes en créant un excellent drainage naturel des boues du bassin à lit de boues vers le bassin central.

L'invention a donc pour objet un dispositif pour la décantation d'un fluide chargé de particules solides comportant un premier bassin de décantation muni d'un système de raclage des boues au fond du bassin, un second bassin annulaire autour du premier bassin, du type à lit de boues, ayant une section trapézoïdale pointe en bas, définie par une paroli verticale, une paroli inclinée et une paroi en faire de cloison verticale cylindrique, commune avec ledit premier bassin, cette paroi présentant une première série d'ouvertures située à un niveau intermédiaire entre le fond et la surface, réalisant une première communication avec le premier bassin, ce second bassin comportant un déversoir, le dispositif étant alimenté en fluide par l'intermédiaire d'un canal collecteur situé à la partie supérieure du second bassin, des moyens de communications étant prévus entre le fond du canal et le voisinage du fond du second bassin, caractérisé en ce que la paroi commune en forme de cloison verticale cylindrique présente une seconde série d'ouvertures au voisinage de sa partie inférieure réalisant ainsi une deuxième communication avec le premier bassin et en ce que ce premier bassin comporte également un déversoir.

Ainsi on assure une excellente évacuation des boues vers la partie centrale sans faire appel à une pompe de recirculation. Il est à noter que pour atteindre ce but, le déversoir du premier bassin est important car il permet d'assurer un débit du second bassin vers le premier bassin et donc d'entraîner les boues.

Selon une réalisation particulière, lesdits moyens de communication consistent en une pluralité de trous percés dans le fond du canal collecteur auxquels sont reliés des tubes rectilignes plongeant dans le fond du second bassir., leur extrémité inférieure étant terminée par un col divergent.

Avantageusement, ladite paroi inclinée du second bassin est reliée au fond du premier bassin.

De préférence une conduite d'amenée du fluide alimente ledit canal collecteur, cette conduite débouchant dans le canal sensiblement parallèlement aux parois dudit canal.

L'invention sera bien comprise à la lumière de la description qui va suivre d'un exemple de réalisation de l'invention, faite ci-après en regard du dessin annexé:

La fig. 1 donne une représentation schématique en coupe d'un dispositif de décantation selon l'invention.

La fig. 2 montre un détail de la fig. 1.

Le dispositif de décantation comprend deux bassins. Un premier bassin circulaire 1 est limité par une cloison cylindrique 2. Ce premier bassin comporte un système de raclage à pilier central 3. Le système de raclage est constitué par des raclettes 4 suspendues à des bras 5 eux mêmes liés à des bras 6 par un système de treillis métallique 7; les bras 6 portent à leur extrémité externe des galets de roulement 8 prenant appui sur un chemin de roulement 9. L'ensemble est supporté par le pilier central 3 par l'intermédiaire de moyens de sapport 10 et est entraîné en rotation dans le sens de la flèche 11 par des moyens moteurs et de transmission classiques non représentés. Un second bassin 12 entoure le premier bassin. Ce second bassin a une section trapézoïdale pointe en bas et comporte deux parois latérales: une première paroi constituée par la cloison verticale cylindrique 2 qui est donc une paroi commune aux deux bassins et une seconde paroi 13 inclinée à la manière d'une surface d'un tronc de cône renversé. Le premier bassin 1 communique avec le second bassin 12 par le moyen de deux séries d'ouvertures: une première série 15 située environ au milieu de la hauteur de la cloison 2 et une seconde série 14 située à la base de la cloison cylindrique 2.

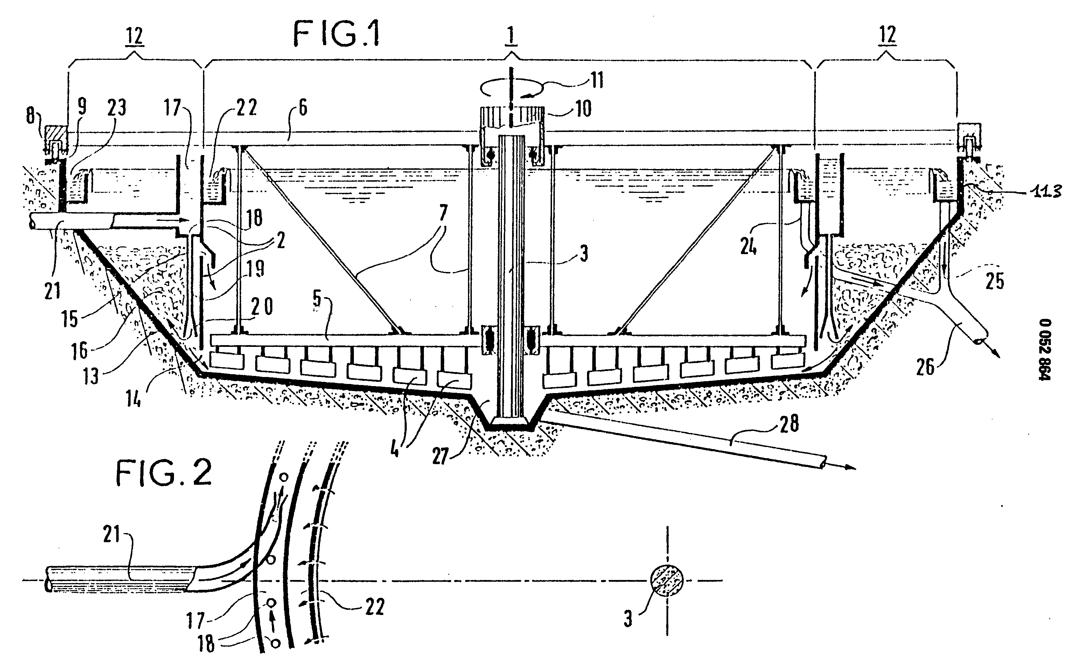

Le second bassin 12 est du type à lit de boues et comporte un déversoir 23. Dans la fig. 1, la référence 16 indique le lit de boues.

L'ensemble est alimenté en fluide à décanter par un canal collecteur 17 dont la paroi inférieure est percée de trous 18 auxquels viennent s'abouter des tubes 19 dont la partie inférieure 20 est évasée en tronc de cône de manière à ralentir la vitesse du fluide à la sortie des tubes pour ne pas perturber le lit des bous. Le canal collecteur est alimenté en fluide à décanter par une conduite d'amenée 21 dont l'extrémité ouverte est parallèle aux parois du canal comme le montre la fig. 2 de manière à imprimer à l'ensemble du liquide du canal un mouvement de rotation évitant des dépôts au fond du canal. Le bassin 1 possède en outre un déversoir 22.

En fonctionnement, l'eau sale arrive par les tubes 19 et filtre à travers le lit de boues 16.

Les boues descendent doucement à travers les ouvertures 14 et sont dirigées par les raclettes 4 en mouvement vers le fond 27 du premier bassin d'où elles sont extraites par une conduite 28. Les surfaces, au niveau supérieur des bassins 1 et 12 étant égales, on récolte 50% de l'eau décantée dans le déversoir 22 et 50% dans le déversoir 23. Les ouvertures 15 assurent le passage de 50% de l'eau du bassin 12 au bassin 1 et maintiennent le lit de boues à un niveau constant en permettant aux boues de se déverser par ces ouvertures.

Le système d'alimentation par tubes 19 débouchant dans un canal collecteur 17 à l'air libre, donne la possibilité de nettoyer ces tubes et donc de maintenir un bon écoulement.

Le dispositif permet, pour un débit traité égal, de diminuer le dimensionnement du système de raclage et de l'ensemble du bassin par rapport à un dispositif constitué par un bassin tel que le bassin 1 du type à décantation et raclage. Par contre, l'utilisation unique d'un bassin à lit de boues tel que le bassin 12 est rapidement prohibitif dès que les débits deviennent importants à cause de la hauteur qu'il faut donner au bassin à parois inclinées pour obtenir la surface nécessaire au débit.

## Revendications

1. Dispositif pour la décantation d'un fluide chargé de particules solides comportant un premier bassin de décantation (1) muni d'un système de raclage (4, 5, 6, 7) des boues au fond du bassin, un second bassin (12) annulaire autour du premier bassin, du type à lit de boues (16), ayant une section trapézoïdale pointe en bas, définie par une paroi verticale (113), une paroi inclinée (13) et une paroi en forme de clotson verticale cylindrique (2), commune avec ledit premier bassin, cette paroi présentant une première série d'ouverture (15) située à un niveau intermédiaire entre le fond et la surface réalisant une première communication avec le premier bassin, ce second bassin comportant un déversoir (23), le dispositif étant alimenté en fluide par l'intermédiaire d'un canal collecteur (17) situé à la partie supérieure du second bassin, des moyens de communication étant prévus entre le fond du canal et le voisinage du fond du second bassin, caractérisé en ce que la paroi commune en forme de clotson verticale cylindrique (2) présente une seconde série d'ouvertures (14) au voisinage de sa partie inférieure réalisant ainsi une deuxième communication avec le premier bassin et en ce que ce premier bassin comporte également un déversoir (22).

2. Dispositif selon la revendication 1, caractérisé en ce que ladite paroi inclinée (13) du second bassin est reliée au fond du premier bassin.

3. Dispositif selon la revendication 2, caractérisé en ce que lesdits moyens de communication consistent en une pluralité de trous (18) percés dans le fond du canal collecteur auxquels sont reliés des tubes rectilignes (19) plongeant dans le fond du second bassin, leur partie inférieure (20) étant évasié en tronc de cône.

4. Dispositif selon l'une des revendications précédentes, caractérisé en ce qu'une conduite d'amenée (21) du fluide alimente ledit canal collecteur (17), cette conduite débouchant dans le canal sensiblement parallèlement aux parois dudit canal.

## Patentansprüche

1. Vorrichtung zur Dekantierung eines feste Teilchen enthaltenden Fluids, die ein erstes Dekantierbecken (1), das mit einem System (4, 5, 6, 7) zum Abschaben des Schlamms am Boden des Beckens ausgerüstet ist, und ein zweites ringförmiges Becken (12) rund um das erste Becken vom Typ eines Schlammbetts (16) aufweist, das einen trapezförmigen Querschnitt mit der Spitze nach unten hat und das durch eine senkrechte Wand (113), eine geneigte Wand (13) und eine Wand in Form einer senkrechten zylindrischen Trennwand (2) zum ersten Becken definiert ist, wobei diese Wand eine erste Serie von Öffnungen (15) aufweist, die sich in einer mittleren Höhe zwischen dem Boden und der Oberfläche befinden und eine erste Verbindung mit dem ersten Becken herstellen, wobei dieses zweite Becken einen Überlauf (23) aufweist, wobei die Vorrichtung über einen Sammelkanal (17), der sich am oberen Teil des zweiten Beckens befindet, mit Fluid versorgt wird und Verbindungswege zwischen dem Boden des Kanals und der Nähe des Bodens des zweiten Beckens vorgesehen sind, dadurch gekennzeichnet, daß die gemeinsame Wand in Form einer senkrechten zylindrischen Trennwand (2) eine zweite Serie von Öffnungen (14) in der Nähe ihres unteren Teils aufweist und so eine zweite Verbindung mit dem ersten Becken herstellt, und daß das erste Bekken ebenfalls einen Überlauf (22) aufweist.

2. Vorrichtung nach Anspruch 1, dadurch gekennzeichnet, daß die geneigte Wand (13) des zweiten Beckens mit dem Boden des ersten Bekkens verbunden ist.

3. Vorrichtung nach Anspruch 2, dadurch gekennzeichnet, daß die Verbindungswege aus einer Vielzahl von Löchern (18) bestehen, die in den Boden des Sammelkanals gebohrt sind und an die geradlinige Rohre (19) angeschlossen sind, die bis auf den Boden des zweiten Beckens reichen und deren unterer Teil (20) sich kegelstumpfförmig erweitert.

4. Vorrichtung nach einem der vorstehenden Ansprüche, dadurch gekennzeichnet, daß eine Zuführungsleitung (21) des Fluids den Sammelkanal (17) versorgt, wobei diese Leitung in den Kanal im wesentlichen parallel zu den Wänden des Kanals mündet.

## Claims

1. A device for decanting a fluid charged with solid particles, comprising a first decanting tank (1) supplied with a scraper system (4, 5, 6, 7) for the sludge on the bottom of the tank, a second annular tank (12) surrounding the first tank, of the type of a sludge bed (16) having a trapezoidal section with downward tip, defined by a vertical wall (113), an inclined wall (13) and a wall (2) in the form of a vertical cylindrical wall forming a common wall with said first tank, this wall presenting a first series of openings (15) situated at an intermediate level between the bottom and the surface, realising a first communication with the first tank, this second tank comprising an overflow (23), fluid being supplied to the device by means of a collector channel (17) situated at the upper part of the second tank, communication means being provided between the bottom of the channel and the vicinity of the bottom of the second tank, characterized in that the common wall in form of a vertical cylindrical wall presents a second series of openings (14) in the vicinity of its lower part, thus realising a second communication with the first tank, and in that the first tank also comprises an overflow (22).

2. A device according to claim 1, characterized in that said inclined wall (13) of the second tank is connected to the bottom of the first tank.

3. A device according to claim 2, characterized in that said communication means consist of a plurality of holes (18) bored into the bottom of the collector channel, to which are connected rectilinear tubes (19) extending down to the bottom of the second tank, their lower part (20) being cone frustrum shaped.

4. A device according to one of the preceding claims, characterized in that a fluid feed pipe (21) feeds said collector channel (17), this pipe opening into the channel essentially parallelly to the walls of said channel.

FIG.1

FIG.2

0 052 864